# EUROPÄISCHE PATENTSCHRIFT

(11) **EP 4 045 808 B1**
(45) Veröffentlichungstag und Bekanntmachung des Hinweises auf die Patenterteilung: **02.04.2025**
(21) Anmeldenummer: 20793346.6
(22) Anmeldetag: 16.10.2020
(51) Int. Cl.: F16D 55/226, F16D 65/097

(54) **SCHEIBENBREMSE FÜR EIN KRAFTFAHRZEUG UND ANORDNUNG WENIGSTENS EINER BELAGHALTEFEDER UND EINER HAUBE AN EINEM BREMSBELAG**
DISK BRAKE FOR A MOTOR VEHICLE AND ARRANGEMENT OF AT LEAST ONE PAD HOLDING SPRING AND A COVER ON A BRAKE PAD
FREIN À DISQUE POUR UN VÉHICULE AUTOMOBILE ET AGENCEMENT D'AU MOINS UN RESSORT DE RETENUE DE PATIN ET D'UN COUVERCLE SUR UN PATIN DE FREIN

(30) Priorität: 17.10.2019 DE 102019128116
(43) Veröffentlichungstag der Anmeldung: 24.08.2022
(60) Teilanmeldung: 25155832.6
(73) Patentinhaber: KNORR-BREMSE Systeme für Nutzfahrzeuge GmbH, 80809 München (DE)
(72) Erfinder: EBNER, Markus, 94099 Ruhstorf (DE); HABERMANN, Dimitrij, 94569 Stephansposching (DE); KOTTEDER, Stephan, 94486 Osterhofen (DE); SCHÖFBERGER, Tobias, 84048 Mainburg (DE); SCHÖNAUER, Manfred, 80995 München (DE); GRAAF, Jutta, 82377 Penzberg (DE); SCHRÖPF, Frederic, 80805 München (DE)
(86) Internationale Anmeldenummer: PCT/EP2020/079240
(87) Internationale Veröffentlichungsnummer: WO 2021/074396

(56) Entgegenhaltungen:
- WO-A1-2017/198467
- DE-A1- 102014 107 227
- DE-B3- 102008 010 570

## Beschreibung

Die vorliegende Erfindung betrifft eine Scheibenbremse für ein Kraftfahrzeug gemäß dem Oberbegriff des Anspruchs 1.

Bei gattungsgemäßen Scheibenbremsen, insbesondere pneumatischen Scheibenbremsen in Fahrzeugen, insbesondere Nutzfahrzeugen, beispielsweise bekannt aus der DE 10 2014107 227 A1 oder der WO 2017/198467 A1, werden Bremsbeläge in sogenannten Belagschächten eines Belagträgers durch einen eine Ausnehmung eines Bremssattels überspannenden Belaghaltebügels gehalten und mittels Belaghaltefedern gegen eine Brücke des Belagschachtes gedrückt. Zur Fixierung der Belaghaltefedern an einer Belagträgerplatte des Bremsbelags dient dabei jeweils eine Haube, die einerseits einen Schlitz in der Belaghaltefeder durchtritt und zum anderen in einer Aufnahme der Belagträgerplatte gehalten ist. Ein solcher Bremsbelag mit über eine solche Haube angeordneter Belaghaltefeder ist auch aus der DE 10 2008 010 570 B3 bekannt.

Die dazu eingesetzten Belaghaltefedern sind so ausgeführt, dass deren Auslegung sich an der maximalen Beständigkeit gegenüber Rüttelbelastungen, wie sie beispielsweise auf schlechten Fahrbahnen auftreten, orientiert.

Dies bedingt, dass die Belaghaltefedern mit relativ hohen Federkräften ausgebildet sein müssen. Im eingebauten Zustand der Bremsbeläge ergibt sich dadurch eine relativ hohe Vorspannung der Bremsbeläge, was wiederum dazu führt, dass zur Verschiebung des Bremssattels, beispielsweise beim Lösen der Bremse, eine relativ hohe Verschiebekraft notwendig ist.

Daraus ergeben sich üblicherweise erhöhte Restschleifmomente zwischen den Bremsbelägen und der Bremsscheibe, was im Fahrzeugbetrieb zu einem erhöhten Abrieb an der Bremsscheibe und den Bremsbelägen führt.

Ein weiterer Nachteil besteht in einem messbaren höheren Kraftstoffverbrauch.

Aufgabe der vorliegenden Erfindung ist es, eine Scheibenbremse der gattungsgemäßen Art dahingehend weiterzuentwickeln, dass bei hinreichend hoher Vorspannung der Bremsbeläge durch die Belaghaltefedern eine ausreichende Lebensdauer der Belagfedern unter Rüttelbelastung ermöglicht und des Weiteren die Vorspannung der Bremsbeläge gegenüber den gattungsgemäßen Scheibenbremsen verringert ist.

Diese Aufgabe wird durch eine Scheibenbremse mit den Merkmalen des Anspruchs 1 gelöst.

Die gestellte Aufgabe wird des Weiteren durch eine Scheibenbremse mit den Merkmalen des Anspruchs 10 gelöst.

Die erfindungsgemäße Scheibenbremse weist eine Bremsscheibe auf, einen Bremssattel, insbesondere einen Schiebesattel, mit einem Zuspannabschnitt und einem Rückenabschnitt. Die Scheibenbremse weist des Weiteren mindestens zwei Bremsbeläge mit jeweils einer mit mindestens einer Belaghaltefeder versehenen Belagträgerplatte auf, die unter Vorspannung durch die jeweilige Belaghaltefeder gegen einen am Bremssattel lösbar befestigten Belaghaltebügel in einem Belagschacht gehalten sind.

Die Belaghaltefeder ist dabei auf einem radial zu einer Drehachse der Bremsscheibe äußeren Rand der Belagträgerplatte radial auslenkbar gehalten.

Eine Haube ist in einer Aufnahme der Belagträgerplatte gehalten und durch die Federkraft der Belaghaltefeder an eine dem Bremsbelag zugewandte Unterseite des Belaghaltebügels andrückbar.

Die Belaghaltefeder ist in radialer Richtung frei innerhalb der Haube bewegbar, wobei die radiale Auslenkbarkeit des Bremsbelags durch Anschlagen der Haube an der Belagträgerplatte begrenzt ist.

Mit einer solchermaßen ausgebildeten Haube ist die Haube selbst als Anschlag gegenüber der Belagträgerplatte ausgebildet und verhindert damit ein Einklemmen der Belaghaltefeder zwischen Belagträgerplatte und Belaghaltebügel. Anders ausgedrückt hindert die Haube als separates, zusätzliches Bauteil der Scheibenbremse in der Art eines Abstandshalters den Bremsbelag daran, gegen die Belaghaltefeder zu schlagen.

Dadurch lassen sich die Federvorspannung der Belaghaltefeder und die Radialhubbegrenzung des Bremsbelages losgelöst voneinander einstellen, wodurch die Kennlinie der Belaghaltefeder besser ausgenutzt werden kann.

Ein großer Vorteil gegenüber bisherigen Lösungen, bei denen die vergleichsweise harte Belagträgerplatte bei starker Rüttelbelastung auf die an dieser anliegenden Belaghaltefeder anschlägt, liegt darin, dass die gegenüber der Belagträgerplatte elastischere Haube bessere Dämpfungseigenschaften bei Rüttelbelastung bietet, wodurch die Geräuschentwicklung und die Belastung des Belaghaltebügels reduziert werden.

Die oben beschriebene Ausgestaltung der Haube ermöglicht so insbesondere, die Belaghaltefeder mit geringerer Federkraft auszuführen, da extreme Rüttelbelastungen nicht durch die Belaghaltefeder allein vollständig ausgeglichen werden müssen, sondern hier unterstützend die Haube als Anschlag dient. Die Haube ist dadurch anstelle der Belaghaltefeder den starken Rüttelbelastungen ausgesetzt.

Dadurch ist ermöglicht, Belaghaltefedern mit geringeren und genauer einstellbaren Federkräften einzusetzen, mit dem Vorteil, dass erhöhte Restschleifmomente zwischen den Bremsbelägen und der Bremsscheibe und damit einhergehend der Kraftstoffverbrauch deutlich reduzierbar sind.

Bevorzugt ist die Elastizität der Haube in radialer Richtung kleiner als die Elastizität der Belaghaltefeder und größer als die Elastizität der Belagträgerplatte und dient so selbst als Federelement mit gegenüber der Belaghaltefeder größerer Federkonstante, so dass durch die Haube selbst harte Stöße abgefedert werden und dadurch die Belaghaltefeder schützt und entlastet.

Gemäß einer vorteilhaften Ausführungsvariante der erfindungsgemäßen Scheibenbremse ist die Aufnahme als umfänglich geschlossene Durchgangsöffnung ausgebildet, wodurch die Haube zuverlässig an der Belagträgerplatte gehalten ist.

Alternativ ist die Aufnahme als Durchgangsöffnung mit einer Lücke zwischen zwei aufeinander zugerichteten Vorsprüngen ausgebildet, deren Breite so ausgeführt ist, dass die Haube nicht entfernbar ist, wodurch die Haube zuverlässig an der Belagträgerplatte gehalten ist.

Im Bereich der Aufnahme für die Haube ist die Belagrückenplatte in axialer Richtung verjüngt, um einen ausreichenden Freigang zu benachbarten Komponenten der Bremse zu gewährleisten.

Eine einfache Fertigung einer solchen Haube ist bevorzugt dadurch gewährleistet, dass die Haube aus einem Blechstück gebogen ist.

Bevorzugt sind aneinander liegende Kanten der Haube stoffschlüssig miteinander verbunden, insbesondere verschweißt.

Die Haube weist bevorzugt einen etwa rechteckigen Querschnitt auf, wodurch einerseits eine hinreichend große Auflagefläche an dem Belaghaltebügel und der Belagträgerplatte und zum zweiten eine hinreichende Stabilität der Haube gewährleistet ist.

Gemäß einer weiteren Ausführungsvariante ist die Haube im oberen, d.h. dem Belaghaltebügel nahen Bereich breiter ausgeführt als im unteren, der Kante der Belagträgerplatte nahen Bereich, um im unteren Bereich ausreichend Platz gegenüber angrenzenden Bauteilen zu erhalten, während im oberen Bereich genügend Raum für eine ausreichende Breite der Belaghaltefeder gewährleistet ist.

Der Abstand einer Unterseite der Haube zu einer Stützfläche der Aufnahme der Belagträgerplatte, an die eine Unterseite der Haube im Falle einer radialen Auslenkung des Bremsbelags in Richtung des Belaghaltebügels andrückbar ist, ist bevorzugt kleiner als der Abstand der Belaghaltefeder zum radial äußeren Rand der Belagträgerplatte im Bereich der Aufnahme.

Gemäß einer alternativen Ausführungsvariante einer erfindungsgemäßen Scheibenbremse, bei der der Belaghaltebügel durch einen verschiebegesichert an dem Rückenabschnitt des Bremssattel befestigten Bolzen gesichert ist, ist der Bolzen aus dem Rückenabschnitt durch eine Durchgangsöffnung der Haube in einen Innenraum der Haube vorstehend als Radialanschlag gegenüber einer Anschlagfläche der Belagträgerplatte ausgebildet.

Bei dieser Variante dient der der Befestigung des Belaghaltebügels dienende Verriegelungsbolzen als Anschlag gegenüber der Belagträgerplatte.

Gemäß einer vorteilhaften Ausführungsvariante ist der Bolzen hier parallel zur Drehachse der Bremsscheibe ausgerichtet.

Gemäß einer vorteilhaften Weiterbildung dieser Ausführungsvariante weist ein im montierten Zustand innerhalb der Haube positionierter Bereich des Bolzens eine Mantelfläche mit der Anschlagfläche der Belagträgerplatte zugewandt abgeflachter Auflagefläche auf.

Die Abflachung dieses Bereichs des Bolzens ermöglicht eine geringere Flächenpressung im Falle der Anlage an der Anschlagfläche der Belagträgerplatte.

Gemäß einer weiteren Ausführungsvariante ist die Aufnahme zum Belaghaltebügel hin durch zwei aufeinander zu gerichtete Vorsprünge begrenzt, die von sich radial erstreckenden Seitenwänden und an einer der Seitenwände angeformten, die Unterseite der Haube bildenden Stegen umschlossen sind.

Auch dadurch ist eine einfache Montage der Haube an der Belagträgerplatte gewährleistet bei gleichzeitig begrenzter radialer Bewegungsmöglichkeit der Haube relativ zur Belagträgerplatte.

Die Bolzen werden üblicherweise mithilfe von Splinten oder dergleichen gegen axiales Verschieben relativ zum Rückenabschnitt des Bremssattels gesichert.

Bei einer bevorzugten Weiterbildung der erfindungsgemäßen Scheibenbremse weist ein im montierten Zustand innerhalb der Haube positionierter Bereich des Bolzens eine Mantelfläche mit wenigstens einer Nut auf, in die ein aus einer der Seitenwände der Haube vorstehender Sicherungssteg zur axialen Fixierung des Bolzens vorsteht.

Dadurch ist ermöglicht, auf den sonst eingesetzten Sicherungssplint zu verzichten.

Gemäß einer weiteren Ausführungsvariante der Erfindung weist ein Mittelstück der Belaghaltefeder einen Schlitz auf, durch den eine Seitenwand der Haube geführt ist.

Dadurch ist in einfacher Weise eine Verbindung zwischen der Belaghaltefeder und der Haube gewährleistet.

Nachfolgend werden Ausführungsbeispiele der Erfindung anhand der beiliegenden Zeichnungen näher erläutert. Es zeigen:
- Figur 1: eine Schnittansicht durch eine Ausführungsvariante einer erfindungsgemäßen Scheibenbremse,
- Figur 2: eine isometrische Detailansicht eines durch einen Belaghaltebügel in einem Belagschacht der Scheibenbremse gehaltenen rückseitigen Bremsbelags und einer an diesem gehaltenen, die Belaghaltefeder radial sichernden Haube,
- Figur 3: eine Draufsicht auf die in Fig. 2 dargestellte Anordnung aus Bremsbelag, Belaghaltefeder und Belaghaltebügel,
- Figur 4: eine weitere isometrische Darstellung des im Belagschacht angeordneten Bremsbelags,
- Figur 5: eine Frontansicht auf eine alternative Ausführungsvariante eines Bremsbelags einer Scheibenbremse mit daran angeordneter Belaghaltefeder und alternativ ausgeführter, am Bremsbelag gehaltener Haube,
- Figur 6: eine isometrische Darstellung der in Fig. 5 dargestellten Anordnung mit abgeflachtem Bolzen,
- Figur 7: eine Seitenschnittansicht eines in einem Belagschacht angeordneten Bremsbelags gemäß Figur 5,
- Figur 8: eine Frontansicht auf eine alternative Ausführungsvariante eines Bremsbelags mit durch eine an diesem gehaltenen Haube gesicherten Belaghaltefedern,
- Figur 9: eine isometrische Detaildarstellung der in Fig. 8 gezeigten Variante,
- Figur 10: eine weitere isometrische Darstellung entsprechend Fig. 9 von der Frontseite des Bremsbelags her,
- Figur 11: eine Seitenschnittansicht der in den Figuren 8 - 10 gezeigten Variante und
- Figur 12: eine isometrische Einzeldarstellung einer Ausführungsvariante einer Haube.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbelag, des Bremsbelags, der Belaghaltefeder, der Haube und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

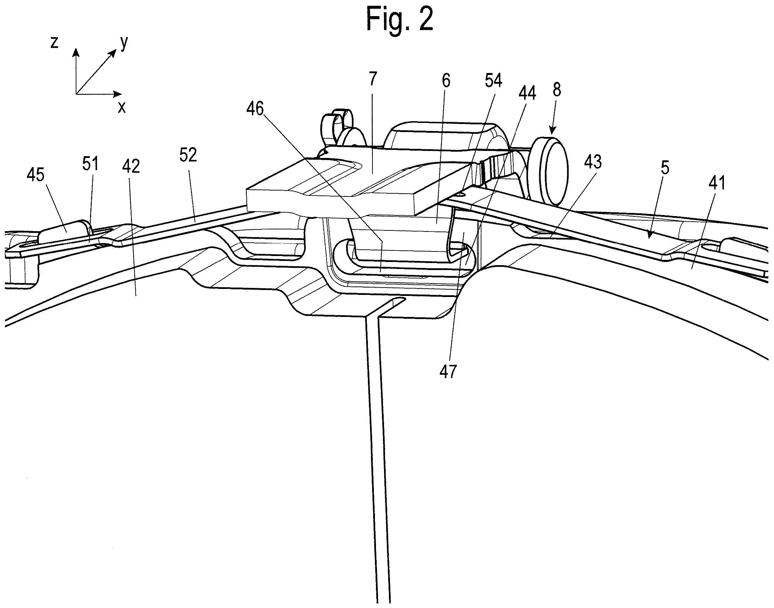

In einem kartesischen Koordinatensystem liegt die Y-Achse parallel zur Bremsscheiben-Drehachse, die Z- Achse verläuft senkrecht zur Bremsscheibendrehachse (siehe Fig. 2) durch die Bremsscheibendrehachse radial in Richtung des Belaghaltebügels oder parallel zu dieser Geraden und die X-Achse verläuft senkrecht zur Y-Achse und zur Z-Achse. Als radiale Richtung ist eine Richtung radial zur Drehachse der Bremsscheibe zur verstehen. Bei der Verwendung des Begriffs "radial" in Bezug auf den Bremsbelag entspricht die radiale Richtung der Richtung der Z- Achse.

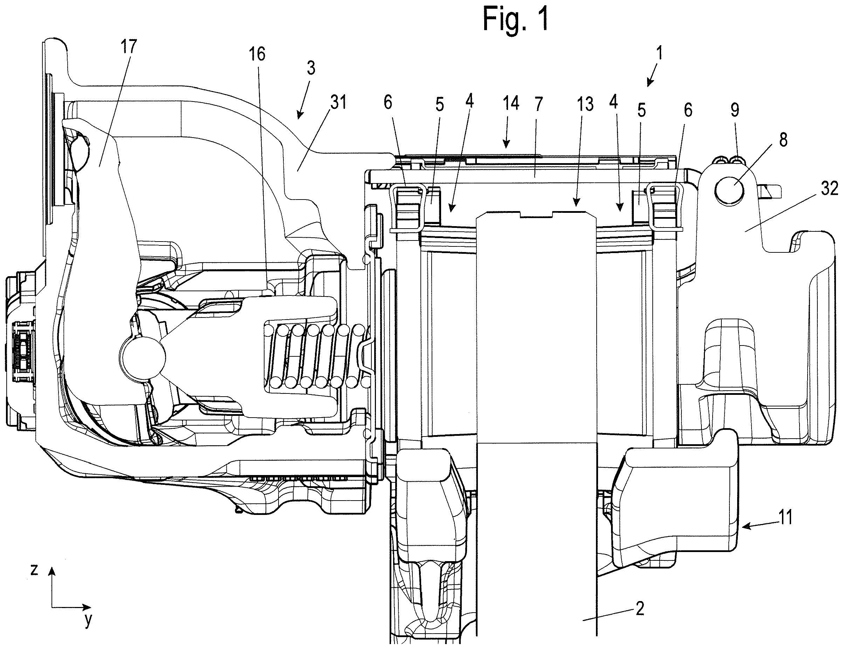

In Fig. 1 ist mit dem Bezugszeichen 1 insgesamt eine Ausführungsvariante einer erfindungsgemäßen Scheibenbremse bezeichnet. Die Scheibenbremse 1 weist eine Bremsscheibe 2 und einen die Bremsscheibe 2 überspannenden Bremssattel 3 auf, der hier als Schiebesattel ausgebildet ist, mit einem Zuspannabschnitt 31 und einem Rückenabschnitt 32.

Im Zuspannabschnitt 31 des Bremssattels 3 ist ein von einem Bremszylinder betätigbarer Bremshebel 17 aufgenommen, der einen Bremsstempel 16 betätigt, der bei Bremsbetätigung gegen einen zuspannseitigen Bremsbelag 4 drückt.

Die Bremsbeläge 4 sind durch eine Ausnehmung 14 in einem Brückenabschnitt zwischen dem Zuspannabschnitt 31 und dem Rückenabschnitt 32 des Bremssattels 3 in einen Belagschacht 13 einsetzbar bzw. herausnehmbar.

Der Belagschacht 13 ist bei der hier gezeigten Ausführungsvariante Teil eines Bremsträgers 11 und wird durch in Umfangsrichtung der Bremsscheibe 2 abständig zueinander angeordnete Bremsträgerhörner 12 und eine die Bremsträgerhörner 12 miteinander verbindende Brücke 15 gebildet.

Die Scheibenbremse 1 weist neben dem zuspannseitigen Bremsbelag 4 einen rückseitigen Bremsbelag 4 auf. Jeder der Bremsbeläge 4 weist eine Belagträgerplatte 41 auf, die durch eine jeweilige an der Belagträgerplatte 41 angeordnete Belaghaltefeder 5 gegen einen am Bremssattel 3 lösbar befestigten Belaghaltebügel 7 im Belagschacht 13 gehalten sind. An der Belagträgerplatte 41 ist des Weiteren ein Reibbelag 42 befestigt, der beim Zuspannen der Bremse gegen die Reibflächen der Bremsscheibe 2 gepresst wird.

Denkbar ist auch eine Befederung des Bremsbelags 4 mit zwei oder mehreren Belaghaltefedern, um beispielsweise eine progressive Federkennlinie zu generieren.

Bei der in Fig. 1 gezeigten Ausführungsvariante der Scheibenbremse 1 ist der Belaghaltebügel 7 im Bereich des Rückenabschnitts 32 durch einen senkrecht zur Längserstreckung des Belaghaltebügels 7 ausgerichteten Bolzen 8 gesichert. Der Bolzen 8 ist dabei durch einen Splint 9 in einer Bohrung im Rückenabschnitt 32 des Bremssattels 3 gegen Herausfallen gesichert.

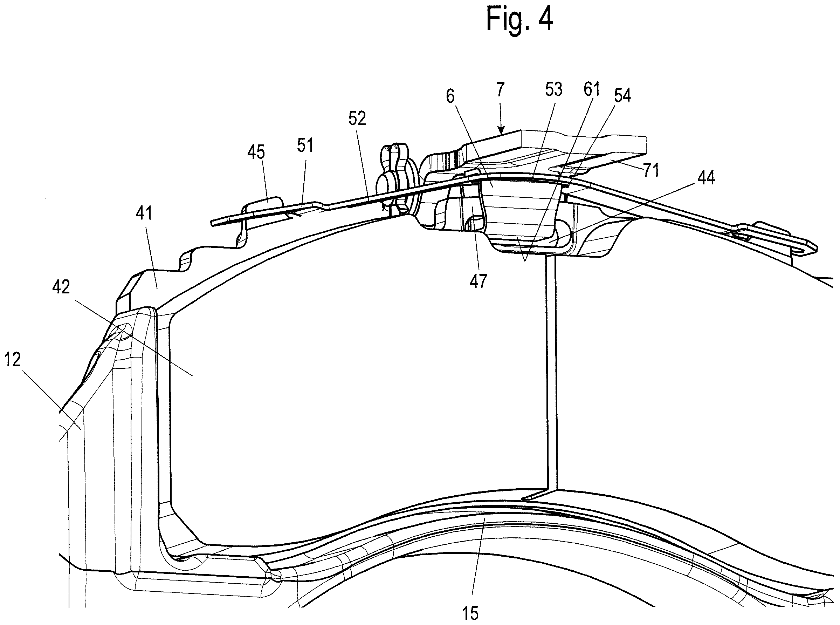

Wie in den **Fig. 1 - 4** gezeigt ist, sind die Belaghaltefedern 5 als bogenförmige Blattfedern ausgebildet. Die Belaghaltefedern 5 sind auf einem radial zur Drehachse der Bremsscheibe 2 äußeren Rand 43 der Belagträgerplatte 41 radial auslenkbar gehalten.

Eine die Belaghaltefeder 5 zum Belaghaltebügel 7 hin überdeckende Haube 6 ist, wie in den Fig. 2 bis 4 dargestellt, im Bereich einer Aufnahme 44 der Belagträgerplatte 41 relativ zur Belagträgerplatte 41 radial auslenkbar an dieser montiert und gehalten.

Die Haube 6 ist dabei bevorzugt klammerartig ausgebildet und kann so zur Montage in der Aufnahme 44 der Belagträgerplatte 41 aufgespreizt werden.

Durch die Federkraft der Belaghaltefeder 5, die im Bereich von Außenstücken 51 an aus dem radial äußeren Rand 43 nach radial außen vorstehenden Nasen 45 abgestützt ist, wird die Haube 6 an eine dem Bremsbelag 4 zugewandte Unterseite 71 des Belaghaltebügels 7 angedrückt, so dass während der Fahrt des Kraftfahrzeugs, beispielsweise auf unebenen Straßen, eine Bewegung der Bremsbeläge 4 radial nach oben, d.h. von der Drehachse der Bremsscheibe 2 aus betrachtet in Richtung des Belaghaltebügels 7 durch die Federkraft der Belaghaltefedern 5 weitgehend unterdrückt wird.

Stärkere Krafteinwirkungen auf die Bremsbeläge 4 radial nach oben werden durch die Haube 6 verhindert.

Dazu ist die Belaghaltefeder 5 in radialer Richtung frei innerhalb der Haube 6 bewegbar, wobei die radiale Auslenkbarkeit des Bremsbelags 4 durch Anschlagen der Belagträgerplatte 41 an die durch die Belaghaltefeder 5 an die dem Bremsbelag 4 zugewandten Unterseite 71 des Belaghaltebügels 7 angedrückte Haube 6 begrenzt ist.

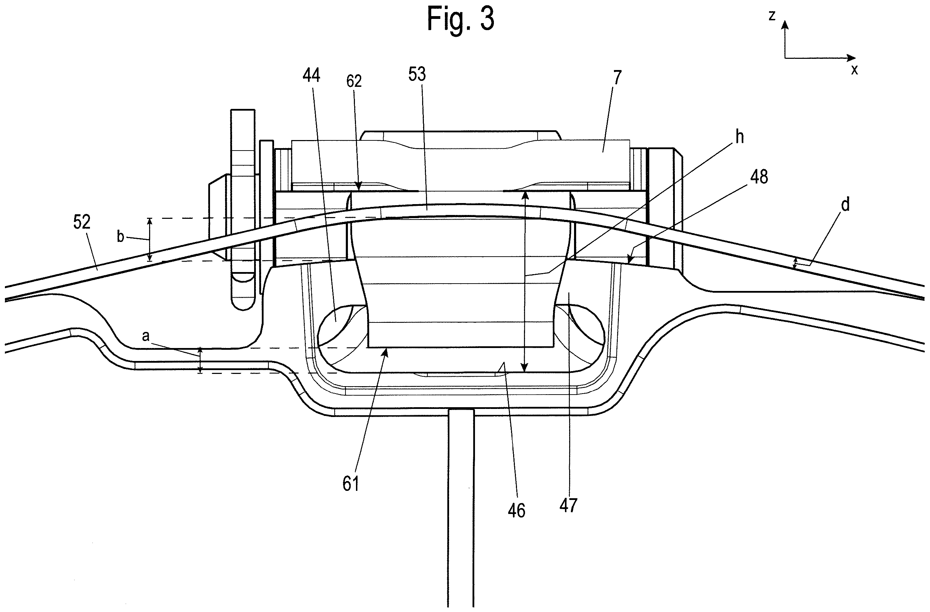

Wie in Fig. 3 dargestellt, ist der Abstand a einer Unterseite 61 der Haube 6 zu einer Stützfläche 46 der Aufnahme 44 der Belagträgerplatte 41, an die die Unterseite 61 der Haube 6 im Falle einer radialen Auslenkung des Bremsbelags 4 in Richtung des Belaghaltebügels 7 andrückbar ist, kleiner als der Abstand b der Belaghaltefeder 5 zum radial äußeren Rand der Belagträgerplatte 41 im Bereich der Aufnahme 44.

An diese Stützfläche 46 der Aufnahme 44 wird eine Unterseite 61 der Haube 6 im Falle einer radialen Auslenkung des Bremsbelags 4 in Richtung des Belaghaltebügels 7 angedrückt.

Die Belaghaltefedern 5 sind in der dargestellten Ausführungsvariante mittels der Haube 6 verliergesichert an der Belagträgerplatte 41 gehalten.

Dazu ist die Belaghaltefeder 5 mit einem Schlitz 54 im Mittenbereich 53 der Belaghaltefeder 5 ausgebildet, durch die im gezeigten Ausführungsbeispiel die dem Reibbelag 42 nahe Seitenwand 63 der Haube 6 durchgeführt ist, so dass die Belaghaltefeder 5 in radialer Richtung bewegbar an der Haube 6 gehalten ist, sich aber nicht von dieser lösen lässt, wenn die Haube 6 an der Belagträgerplatte 41 fixiert ist.

Die Aufnahme 44 der Belagträgerplatte 41 ist bevorzugt als umfänglich geschlossene Durchgangsöffnung ausgebildet. Die Aufnahme 44 ist dabei, wie in den Fig. 2-4 gezeigt, bevorzugt schlitzförmig ausgebildet und wird zum Belaghaltebügel 7 hin durch einen Steg 47 begrenzt. In dem Schlitz ist eine einen Boden 61 bildende Unterseite 61 der Haube 6 aufgenommen.

Die dem Belaghaltebügel 7 zugewandte Oberseite dieses Stegs 47 bildet dabei den radial äußeren Rand 43, der auch bei größerer Krafteinwirkung auf den Bremsbelag 4 in radialer Richtung bedingt durch die Höhe h der Haube 6 nicht gegen die Belaghaltefeder 5 gedrückt wird.

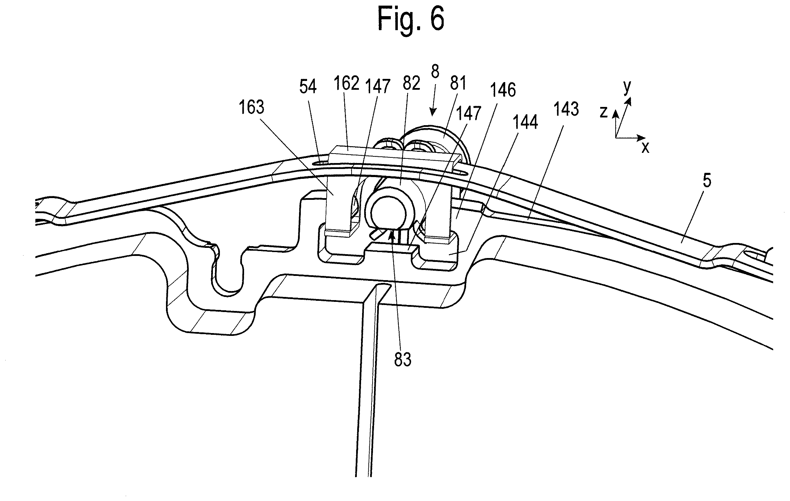

Alternativ ist die Aufnahme 44 zum Belaghaltebügel 7 hin durch zwei aufeinander zu gerichtete Vorsprünge begrenzt, wie es auch in der weiter unten noch anhand Figur 6 näher beschriebenen alternativen Variante gezeigt ist, wobei eine Lücke zwischen den Vorsprüngen kleiner ist als Breite der Haube 6 in Richtung der Längserstreckung der Belaghaltefeder 5.

Die Haube 6 ist hier bevorzugt aus einem einzigen Blechstück gebogen, bevorzugt zu einer Haube 6 mit etwa rechteckigem Querschnitt mit der der Stützfläche 46 der Belagträgerplatte 41 zugewandten Unterseite 61, einer dem Belaghaltebügel 7 zugewandten Oberseite 62 sowie zwei sich etwa radial erstreckende Seitenwände 63, wobei ein freies Ende einer der Seitenwände 63, 64 auf die Unterseite 61 der Haube 6 stößt.

Aneinander liegende Kanten der Haube 6 sind dabei bevorzugt formschlüssig oder stoffschlüssig miteinander verbunden, insbesondere miteinander verschweißt.

Wie insbesondere in Fig. 3 dargestellt ist, ist die Haube 6 in einer Ausführungsvariante in einem im eingebauten Zustand dem Belaghaltebügel 7 nahen oberen Bereich breiter ist als in einem dem Rand 43 der Belagträgerplatte 41 nahen unteren Bereich. Dadurch wird im unteren Bereich ausreichend Platz gegenüber angrenzenden Bauteilen geschaffen, während im oberen Bereich genügend Raum für eine ausreichende Breite der Belaghaltefeder gewährleistet ist.

Nach einer hier nicht dargestellten Ausführungsvariante weist die Haube 6 eine konstante Breite und damit parallele Seitenwände auf.

Denkbar ist auch, die Haube 6 mit konvex geformten Seitenwänden auszubilden, welche einem Verklemmen der Haube 6 auf der Belagträgerplatte 41 bei hoher Belastung entgegenwirken.

Denkbar ist auch, die Belaghaltefeder 5 ohne den oben beschriebenen Schlitz 54 auszubilden und diese vollständig innerhalb des durch die Seitenwände 63, 64 und die Oberseite 62 und Unterseite 61 der Haube 6 gebildeten Tunnels aufzunehmen.

Denkbar ist auch, dass die Haube 6 zur Aufnahme von jeweils zwei Belaghaltefedern 5 dient, um eine progressive Federkennlinie darstellen zu können.

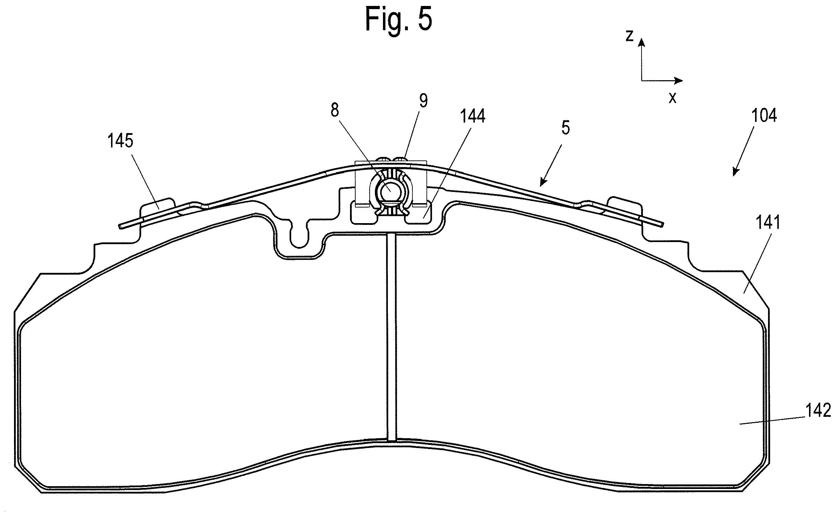

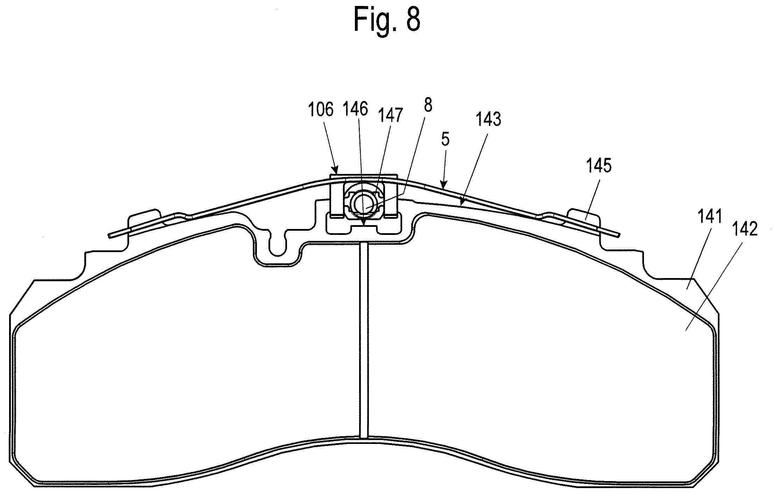

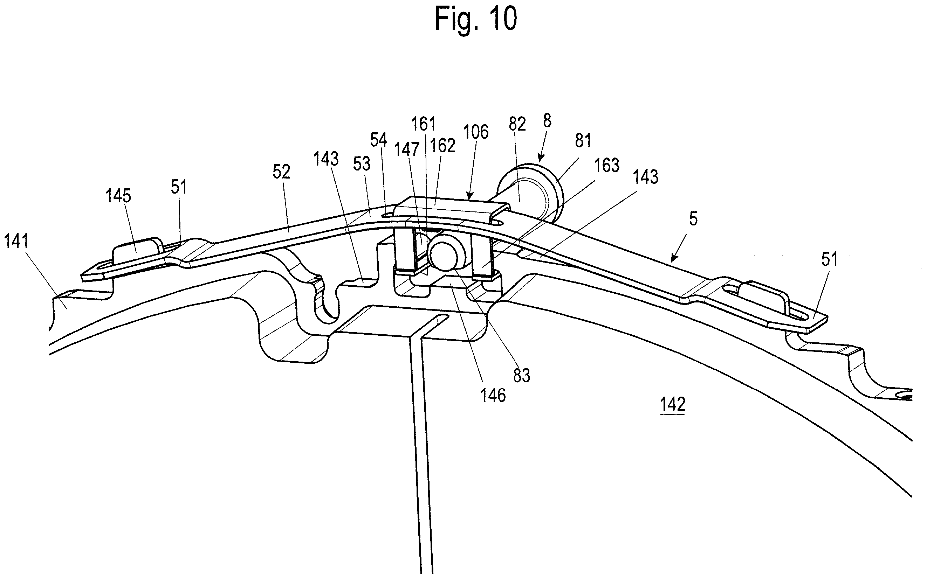

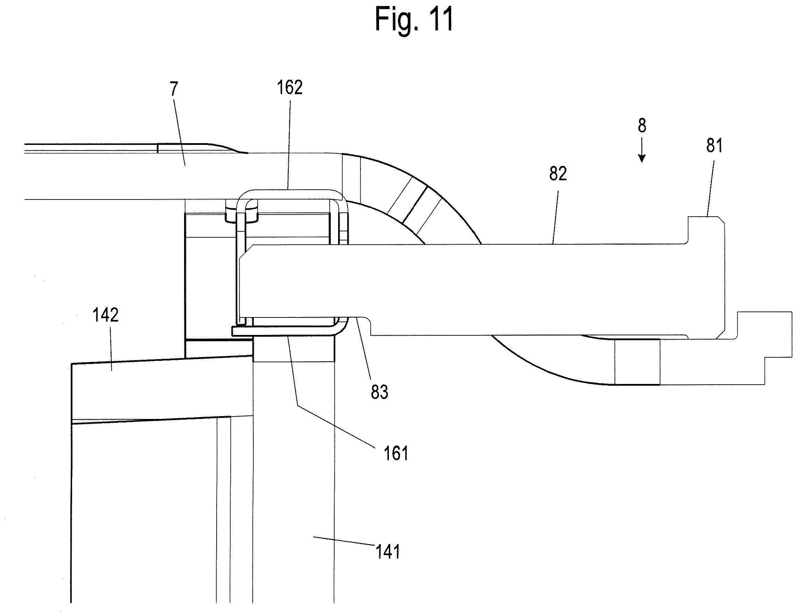

Bei den in den **Fig. 5-12** gezeigten Ausführungsvarianten der Scheibenbremse 1 dient prinzipiell der Bolzen 8, der der Sicherung des Belaghaltebügels 7 am Rückenabschnitt 32 des Bremssattels 3 dient, als Radialanschlag gegenüber eine Anschlagfläche der Belagträgerplatte 141.

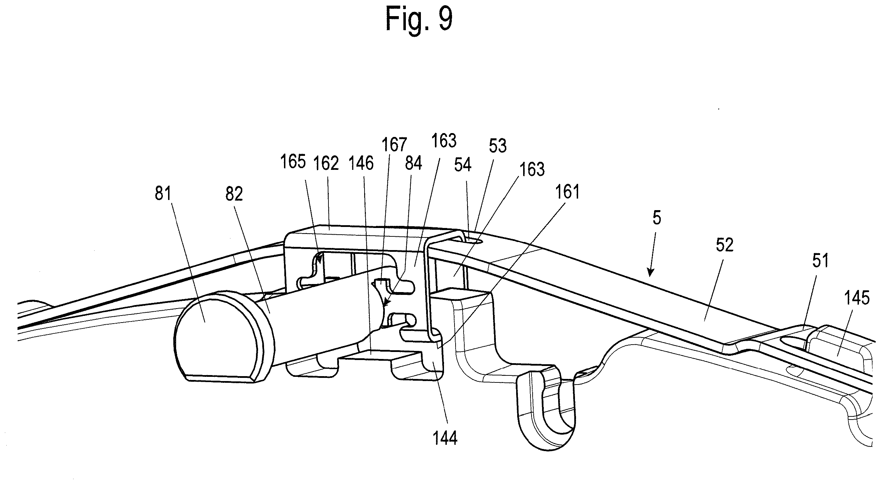

Wie insbesondere in Fig. 9 dargestellt ist, steht der im Rückenabschnitt 32 des Bremssattels 3 befestigte Bolzen aus dem hier nicht dargestellten Rückenabschnitt 32 durch eine Durchgangsöffnung 165 der Haube 106 in einen Innenraum der Haube 106 vor.

Die Aufnahme 144 der Belagträgerplatte 141 ist radial nach innen durch zwei aufeinander zu, in Richtung der Längserstreckung der Belaghaltefeder 5 gerichtete Vorsprünge 147 begrenzt. Die Vorsprünge 147 sind dabei von sich radial erstreckenden Seitenwänden 163 und einer an einer der Seitenwände 163 angeformten, die Unterseite 161 der Haube 106 bildenden Stegen umschlossen. Aneinander liegende Kanten der Haube 6 sind bevorzugt stoffschlüssig miteinander verbunden, insbesondere miteinander verschweißt.

Die Seitenwände 163 sind dabei parallel zur Reibbelagfläche des Reibbelags 142 ausgerichtet.

Die die Unterseite 161 der Haube 106 bildenden Stegen untergreifen im montierten Zustand die Vorsprünge 147 und gewährleisten so die radiale Fixierung der Haube 106 innerhalb der Aufnahme 144.

Die Stützfläche 146 ist gegenüber den diesen benachbarten Bereichen des Randes leicht erhöht, unter Ausbildung eines Plateaus, so dass im Falle eines Anschlagens der als Plateau ausgebildeten Stützfläche 146 an die Auflagefläche 83 des Bolzens 8 nicht durch die Unterseite 161 der Haube 106 behindert ist.

Bevorzugt ist die plateauartig ausgebildete Stützfläche 146 so weit erhöht, dass beim Anschlagen der Auflagefläche 83 des Bolzens 8 gleichzeitig die Unterseite 161 der Haube 106 auf dem Rand 143 der Belagträgerplatte 141 zum Aufliegen kommt.

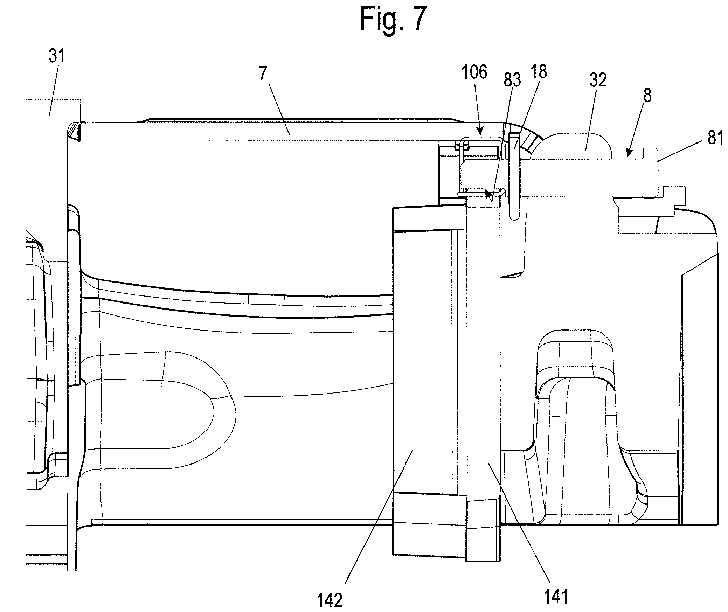

Wie in Fig. 7 gezeigt, ist der Bolzen 8 bevorzugt parallel zur Drehachse der Bremsscheibe 2 ausgerichtet.

Wie in den Figuren 5-11 des Weiteren gezeigt ist, ist ein im montierten Zustand innerhalb der Haube 106 positionierter Bereich des Bolzens 8 mit einer der Anschlagfläche 146 der Belagträgerplatte 141 zugewandt abgeflachten Auflagefläche 83 ausgebildet, wodurch die Flächenpressung im Falle eines Anschlagens reduziert wird.

Auch bei den in den Fig. 5-12 gezeigten Ausführungsvarianten erstreckt sich die Haube 106 radial über die Belaghaltefeder 5. Die Belaghaltefeder 5 ist mit einem Schlitz 54 im Mittenbereich 53 der Belaghaltefeder 5 ausgebildet, durch die im gezeigten Ausführungsbeispiel die dem Reibbelag 142 nahe Seitenwand 163 der Haube 106 durchgeführt ist.

Insbesondere bei dieser Ausführungsvariante ist es auch denkbar, die Haube 6 mit der an dieser montierten Belaghaltefeder 5 als vormontierte Baueinheit auszubilden.

Während bei der in den Fig. 5-7 gezeigten Ausführungsvariante der Bolzen 8 in einem Bereich zwischen dem Rückenabschnitt 32 des Bremssattels 3 und der Haube 106 durch einen Splint gegen eine Axialverschiebung gesichert ist, ist bei der in den Fig. 9-12 gezeigten Ausführungsvarianten die Haube 106 mit zwei aus den Seitenwänden 163 der Haube 106 vorstehenden Sicherungsstegen 167 zur axialen Fixierung des Bolzens 8 (axial zur Längsachse des Bolzens 8) ausgebildet.

Der Bolzen 8 weist entsprechend in seiner Mantelfläche 82 entsprechende Nuten 84 auf, in die die Sicherungsstege 167 im montierten Zustand vorstehen und so die axiale Fixierung des Bolzens 8 sicherstellen.

Denkbar ist prinzipiell auch, nur eine Nut 84 und entsprechend nur einen solchen Sicherungssteg 167 an der Haube 106 auszubilden.

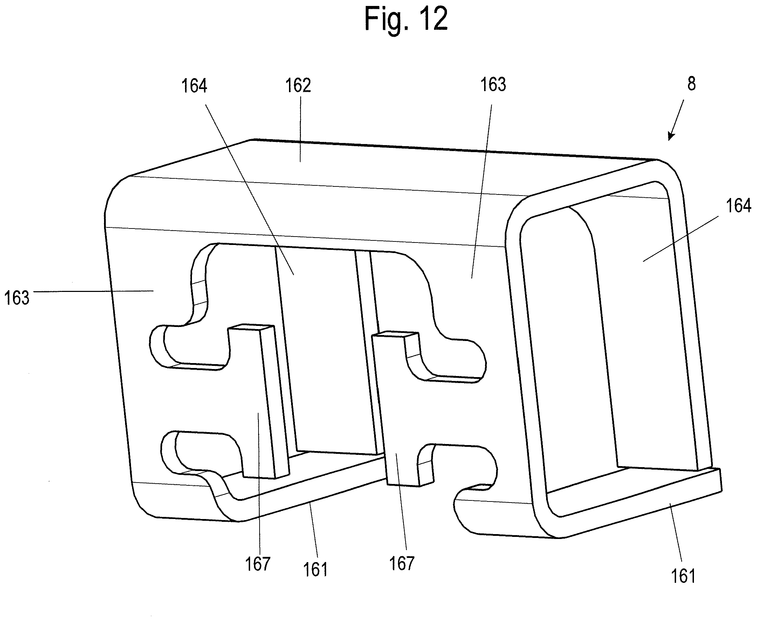

Die Haube 106 ist in Fig. 12 in einer isometrischen Einzeldarstellung gezeigt.

Auch die Haube 106 ist bevorzugt aus einem Blechstück in eine quaderförmigen Gestalt gebogen, wobei die Seitenwand 164 mit der Durchgangsöffnung 165 durch zwei stegartige Seitenwandflächen ausgebildet ist, aus der die Durchgangsöffnung 165 herausgeschnitten ist.

Die vordere Seitenwand 163 weist ebenfalls zwei solche Stege auf, die im Endbereich zur Unterseite 161 umgebogen sind. Im Bereich der Seitenwand 163 sind die Sicherungsstege 167 angeformt.

Die Haube 106 kann so zur Montage in einer Kippbewegung zunächst in die Aufnahme 144 eingeführt und anschließend radial nach unten bewegt werden, so dass die Sicherungsstege 167 in die Nuten 84 des Bolzens 8 eingreifen.

Ist die Haube 106 bereits vormontiert, ist es auch möglich, zur Montage und Sicherung des Bolzens 8 die Sicherungsstege 167 derart einfederbar als Federelemente zu gestalten, dass diese bei einem Einführen des Bolzens 8 in die Haube 8 aufgespreizt werden und dann in den Nuten 84 des Bolzens 8 einrasten.

Denkbar ist auch, anstelle der Auflagefläche 146 an der Belagträgerplatte 141 innerhalb der Haube 106 einen parallel zur Unterseite 161 etwa oberhalb der Unterseite 161 vorgesehenen Anschlagsteg auszubilden, auf dem die Auflagefläche 83 des Bolzens 8 im Falle einer durch starkes Rütteln bedingten Anhebung des Bremsbelags 104 anschlägt.

Denkbar ist auch, die rückseitige Durchgangsöffnung 165 der Haube 106 als kreisförmige oder ellipsenförmige Öffnung auszubilden.

### Bezugszeichenliste

- 1: Scheibenbremse

- 2: Bremsscheibe

- 3: Bremssattel
- 31: Zuspannabschnitt
- 32: Rückenabschnitt

- 4: Bremsbelag
- 41: Belagträgerplatte
- 42: Reibbelag
- 43: Rand
- 44: Aufnahme
- 45: Nase
- 46: Stützfläche
- 47: Steg
- 48: Rand

- 104: Bremsbelag
- 141: Belagträgerplatte
- 142: Reibbelag
- 143: Rand
- 144: Aufnahme
- 145: Nase
- 146: Stützfläche

- 5: Belaghaltefeder
- 51: Außenstück
- 52: Zwischenstück
- 53: Mittelstück
- 54: Schlitz

- 6: Haube
- 61: Unterseite
- 62: Oberseite
- 63: Seitenwand
- 64: Seitenwand

- 106: Haube
- 161: Unterseite
- 162: Oberseite
- 163: Seitenwand
- 164: Seitenwand
- 165: Durchgangsöffnung
- 166: Stützsteg
- 167: Sicherungssteg

- 7: Belaghaltebügel

- 8: Bolzen
- 81: Bolzenkopf
- 82: Mantelfläche
- 83: Auflagefläche
- 84: Nut

- 9: Splint

- 11: Bremsträger
- 12: Bremsträgerhorn
- 13: Belagschacht
- 14: Ausnehmung
- 15: Brücke
- 16: Bremsstempel
- 17: Bremshebel

- d: Dicke der Belaghaltefeder
- a: Abstand
- b: Abstand

- x: Richtung
- y: Richtung
- z: Richtung

## Patentansprüche

1. Scheibenbremse (1) für ein Kraftfahrzeug, insbesondere für ein Nutzfahrzeug, aufweisend
- eine Bremsscheibe (2),
- einen Bremssattel (3), insbesondere ein Schiebesattel, mit einem Zuspannabschnitt (31) und einem Rückenabschnitt (32),
- mindestens zwei Bremsbeläge (4, 104) mit jeweils einer mit mindestens einer Belaghaltefeder (5) versehenen Belagträgerplatte (41, 141),
- die unter Vorspannung durch die jeweilige Belaghaltefeder (5) gegen einen am Bremssattel (3) lösbar befestigten Belaghaltebügel (7) in einem Belagschacht (13) gehalten sind,
- wobei die Belaghaltefeder (5) auf einem radial zu einer Drehachse der Bremsscheibe (2) äußeren Rand (43) der Belagträgerplatte (41, 141) radial auslenkbar gehalten ist,
- wobei in einer Aufnahme (44, 144) der Belagträgerplatte (41, 141) eine Haube (6, 106) gehalten und durch die Federkraft der Belaghaltefeder (5) an eine dem Bremsbelag (4, 104) zugewandte Unterseite (71) des Belaghaltebügels (7) andrückbar ist, wobei
- die Belaghaltefeder (5) in radialer Richtung frei innerhalb der Haube (6) bewegbar ist, **dadurch gekennzeichnet, dass** die radiale Auslenkbarkeit des Bremsbelags (4) durch Anschlagen der Haube (6) an der Belagträgerplatte (41) begrenzt ist.

2. Scheibenbremse (1) nach Anspruch 1,
**dadurch gekennzeichnet, dass** die Aufnahme (44) als umfänglich geschlossene Durchgangsöffnung ausgebildet ist.

3. Scheibenbremse (1) nach Anspruch 1,
**dadurch gekennzeichnet, dass** die Aufnahme (44) zum Belaghaltebügel (7) hin durch zwei aufeinander zu, in Richtung der Längserstreckung der Belaghaltefeder (5) gerichtete Vorsprünge (147) begrenzt ist, wobei eine Lücke zwischen den Vorsprüngen (147) kleiner ist als Breite der Haube (6) in Richtung der Längserstreckung der Belaghaltefeder (5).

4. Scheibenbremse (1) nach einem der vorstehenden Ansprüche,
**dadurch gekennzeichnet, dass** die Haube (6) aus einem Blechstück gebogen ist.

5. Scheibenbremse (1) nach Anspruch 4,
**dadurch gekennzeichnet, dass** aneinander liegende Kanten der Haube (6) stoffschlüssig miteinander verbunden, insbesondere miteinander verschweißt sind.

6. Scheibenbremse (1) nach einem der vorstehenden Ansprüche,
**dadurch gekennzeichnet, dass** die Haube (6) einen etwa rechteckigen Querschnitt aufweist.

7. Scheibenbremse (1) nach einem der vorstehenden Ansprüche,
**dadurch gekennzeichnet, dass** in radialer Richtung die Elastizität der Haube (6) kleiner ist als die Elastizität der Belaghaltefeder (5) und größer ist als die Elastizität der Belagträgerplatte (41).

8. Scheibenbremse (1) nach einem der vorstehenden Ansprüche,
**dadurch gekennzeichnet, dass** die Haube (6) in einem im eingebauten Zustand dem Belaghaltebügels (7) nahen oberen Bereich breiter ist als in einem dem Rand (43) der Belagträgerplatte (41) nahen unteren Bereich.

9. Scheibenbremse (1) nach einem der vorstehenden Ansprüche,
**dadurch gekennzeichnet, dass** ein Abstand (a) einer Unterseite (61) der Haube (6) zu einer Stützfläche (46) der Aufnahme (44) der Belagträgerplatte (41), an die die Unterseite (61) der Haube (6) im Falle einer radialen Auslenkung des Bremsbelags (4) in Richtung des Belaghaltebügels (7) andrückbar ist, kleiner ist als der Abstand (b) der Belaghaltefeder (5) zum radial äußeren Rand der Belagträgerplatte (41) im Bereich der Aufnahme (44).

10. Scheibenbremse (1) für ein Kraftfahrzeug, insbesondere für ein Nutzfahrzeug, aufweisend
- eine Bremsscheibe (2),
- einen Bremssattel (3), insbesondere ein Schiebesattel, mit einem Zuspannabschnitt (31) und einem Rückenabschnitt (32),
- mindestens zwei Bremsbeläge (4, 104) mit jeweils einer mit mindestens einer Belaghaltefeder (5)versehenen Belagträgerplatte (41, 141),
- die unter Vorspannung durch die jeweilige Belaghaltefeder (5) gegen einen am Bremssattel (3) lösbar befestigten Belaghaltebügel (7) in einem Belagschacht (13) gehalten sind,
- wobei die Belaghaltefeder (5) auf einem radial zu einer Drehachse der Bremsscheibe (2) äußeren Rand (43) der Belagträgerplatte (41,141) radial auslenkbar gehalten ist,
- wobei in einer Aufnahme (44,144) der Belagträgerplatte (41, 141) eine Haube (6, 106) gehalten und durch die Federkraft der Belaghaltefeder (5) an eine dem Bremsbelag (4, 104) zugewandte Unterseite (71) des Belaghaltebügels (7) andrückbar ist,
wobei der Belaghaltebügel (7) durch einen verschiebegesichert an dem Rückenabschnitt (32) des Bremssattel (3) befestigten Bolzen (8) gesichert ist,
**dadurch gekennzeichnet, dass**
der Bolzen (8) aus dem Rückenabschnitt (32) durch eine Durchgangsöffnung (165) der Haube (106) in einen Innenraum der Haube (106) vorstehend als Radialanschlag gegenüber einer Anschlagfläche der Belagträgerplatte (141) ausgebildet ist.

11. Scheibenbremse (1) nach Anspruch 10,
**dadurch gekennzeichnet, dass** der Bolzen (8) parallel zur Drehachse der Bremsscheibe (2) ausgerichtet ist.

12. Scheibenbremse (1) nach Anspruch 10 oder 11,
**dadurch gekennzeichnet, dass** ein im montierten Zustand innerhalb der Haube (106) positionierter Bereich des Bolzens (8) eine Mantelfläche (82) mit der Anschlagfläche (146) der Belagträgerplatte (141) zugewandt abgeflachter Auflagefläche (83) aufweist.

13. Scheibenbremse (1) nach einem der Ansprüche 10 bis 12,
**dadurch gekennzeichnet, dass** die Aufnahme (144) zum Belaghaltebügel (7) hin durch zwei aufeinander zu gerichtete Vorsprünge (147) begrenzt ist, die von sich radial erstreckenden Seitenwänden (163) und einer an einer der Seitenwände (163) angeformten, die Unterseite (161) der Haube (6) bildenden Stegen umschlossen sind.

14. Scheibenbremse (1) nach einem der Ansprüche 10 bis 13,
**dadurch gekennzeichnet, dass** ein im montierten Zustand innerhalb der Haube (106) positionierter Bereich des Bolzens (8) eine Mantelfläche (82) mit wenigstens einer Nut (84) aufweist, in die ein aus einer der Seitenwände (163) der Haube (106) vorstehender Sicherungssteg (167) zur axialen Fixierung des Bolzens (8) vorsteht.

15. Scheibenbremse (1) nach einem der vorstehenden Ansprüche,
**dadurch gekennzeichnet, dass** ein Mittelstück (53) der Belaghaltefeder (5) einen Schlitz (54) aufweist, durch den eine Seitenwand (63, 163) der Haube (6) geführt ist.

## Claims

1. Disc brake (1) for a motor vehicle, in particular for a utility vehicle, having
- a brake disc (2);
- a brake caliper (3), in particular a sliding caliper, with a brake-application section (31) and a rear section (32),
- at least two brake pads (4, 104) each having a pad carrier plate (41, 141) provided with at least one pad holding spring (5),
- which are held under preload by the respective pad holding spring (5) against a pad holding clip (7) detachably fastened to the brake caliper (3) in a pad shaft (13),
- wherein the pad holding spring (5) is held in a radially deflectable manner on a radially outer edge (43) of the pad carrier plate (41, 141) relative to an axis of rotation of the brake disc (2),
- wherein a cover (6, 106) is held in a receptacle (44, 144) of the pad carrier plate (41, 141) and can be pressed by the spring force of the pad holding spring (5) against an underside (71) of the pad holding clip (7) facing the brake pad (4, 104), wherein
- the pad holding spring (5) is freely movable in the radial direction within the cover (6), **characterised in that**
the radial deflectability of the brake pad (4) is limited by stops of the cover (6) on the pad carrier plate (41).

2. Disc brake (1) according to claim 1,
**characterised in that the receptacle (44) is designed as a circumferentially closed through-opening.**

3. Disc brake (1) according to claim 1,
**characterised in that the receptacle (44) is bounded towards**
the pad holding clip (7) by two projections (147) directed towards each other in the longitudinal extension direction of the pad holding spring (5), wherein a gap between the projections (147) is smaller than the width of the cover (6) in the longitudinal extension direction of the pad holding spring (5).

4. Disc brake (1) according to any one of the preceding claims,
**characterised in that the cover (6) is bent from a sheet metal piece.**

5. Disc brake (1) according to claim 4,
**characterised in that adjoining edges of the cover (6) are integrally connected to each other, in particular welded to each other.**

6. Disc brake (1) according to any one of the preceding claims,
**characterised in that the cover (6) has an approximately rectangular cross-section.**

7. Disc brake (1) according to any one of the preceding claims,
**characterised in that in the radial direction the elasticity of the cover (6) is less than the elasticity of the pad holding spring (5) and greater than the elasticity of the pad carrier plate (41).**

8. Disc brake (1) according to any one of the preceding claims,
**characterised in that the cover (6) is wider in an upper region that is close to the pad holding clip (7) when said cover is installed than in a lower region close to the edge (43) of the pad carrier plate (41).**

9. Disc brake (1) according to any one of the preceding claims,
**characterised in that a distance (a) from an underside (61) of the cover (6) to a support surface (46) of the receptacle (44) of the pad carrier plate (41), against which the underside (61) of the cover (6) can be pressed in the event of a radial deflection of the brake pad (4) in the direction of the pad holding clip (7), is smaller than the distance (b) of the pad holding spring (5) to the radially outer edge of the pad carrier plate (41) in the region of the receptacle (44).**

10. Disc brake (1) for a motor vehicle, in particular for a utility vehicle, having
- a brake disc (2);
- a brake caliper (3), in particular a sliding caliper, with a brake-application section (31) and a rear section (32),
- at least two brake pads (4, 104) each having a pad carrier plate (41, 141) provided with at least one pad holding spring (5),
- which are held under preload by the respective pad holding spring (5) against a pad holding clip (7) detachably fastened to the brake caliper (3) in a pad shaft (13),
- wherein the pad holding spring (5) is held in a radially deflectable manner on a radially outer edge (43) of the pad carrier plate (41, 141) relative to an axis of rotation of the brake disc (2),
- wherein a cover (6, 106) is held in a receptacle (44, 144) of the pad carrier plate (41, 141) and can be pressed by the spring force of the pad holding spring (5) against an underside (71) of the pad holding clip (7) facing the brake pad (4, 104),
wherein the pad holding clip (7) is secured by a bolt (8) fastened to the rear section (32) of the brake caliper (3) in a manner secured against displacement,
**characterised in that**
the bolt (8) projects from the rear section (32) through a through-opening (165) of the cover (106) into an interior of the cover (106) and is formed as a radial stop against a stop surface of the pad carrier plate (141).

11. Disc brake (1) according to claim 10,
**characterised in that the bolt (8) is aligned parallel to the axis of rotation of the brake disc (2).**

12. Disc brake (1) according to claim 10 or 11,
**characterised in that a region of the bolt (8) positioned within the cover (106) in the mounted state has a lateral surface (82) with flattened bearing surface (83) facing the stop surface (146) of the pad carrier plate (141).**

13. Disc brake (1) according to any one of claims 10 to 12,
**characterised in that the receptacle (144) is bounded towards the pad holding clip (7) by two projections (147) directed towards each other, which are enclosed by radially extending side walls (163) and a webs which are moulded on one of the side walls (163) and which form the underside (161) of the cover (6).**

14. Disc brake (1) according to any one of claims 10 to 13,
**characterised in that a region of the bolt (8) positioned within the cover (106) in the mounted state has a lateral surface (82) with at least one groove (84) into which a securing web (167) projecting from one of the side walls (163) of the cover (106) projects for axial fixation of the bolt (8).**

15. Disc brake (1) according to any one of the preceding claims,
**characterised in that a central piece (53) of the pad holding spring (5) has a slot (54) through which a side wall (63, 163) of the cover (6) is guided.**

## Revendications

1. Frein à disque (1) pour un véhicule automobile, en particulier pour un véhicule utilitaire, présentant
- un disque de frein (2),
- un étrier de frein (3), en particulier un étrier coulissant, avec une section de serrage (31) et une section arrière (32),
- au moins deux garnitures de frein (4, 104) avec respectivement une plaque de support de garniture (41, 141) dotée d'au moins un ressort de maintien de garniture (5),
- qui sont maintenues sous précontrainte par le ressort de maintien de garniture (5) respectif contre un étrier de maintien de garniture (7) fixé de manière amovible sur l'étrier de frein (3) dans un puits de garniture (13),
- dans lequel le ressort de maintien de garniture (5) est maintenu radialement de manière à pouvoir être dévié sur un bord extérieur (43) de la plaque de support de garniture (41, 141) radialement par rapport à un axe de rotation du disque de frein (2),
- dans lequel un capot (6, 106) est maintenu dans un logement (44, 144) de la plaque de support de garniture (41, 141) et peut être pressé par la force de ressort du ressort de maintien de garniture (5) contre un côté inférieur (71) de l'étrier de maintien de garniture (7) tourné vers la garniture de frein (4, 104), dans lequel
- le ressort de maintien de garniture (5) peut se déplacer librement en direction radiale à l'intérieur du capot (6), **caractérisé en ce que**
la capacité de déviation radiale de la garniture de frein (4) est limitée par des butées du capot (6) sur la plaque de support de garniture (41).

2. Frein à disque (1) selon la revendication 1,
**caractérisé en ce que** le logement (44) est conçu en tant qu'ouverture traversante fermée sur sa circonférence.

3. Frein à disque (1) selon la revendication 1,
**caractérisé en ce que** le logement (44) est délimité vers
l'étrier de maintien de garniture (7) par deux saillies (147) dirigées l'une vers l'autre en direction de l'extension longitudinale du ressort de maintien de garniture (5), dans lequel un espace entre les saillies (147) est inférieur à la largeur du capot (6) en direction de l'extension longitudinale du ressort de maintien de garniture (5).

4. Frein à disque (1) selon l'une quelconque des revendications précédentes,
**caractérisé en ce que** le capot (6) est plié à partir d'une pièce de tôle.

5. Frein à disque (1) selon la revendication 4,
**caractérisé en ce que** des bords adjacents du capot (6) sont connectés entre eux par accouplement de matière, en particulier soudés entre eux.

6. Frein à disque (1) selon l'une quelconque des revendications précédentes,
**caractérisé en ce que** le capot (6) présente une section transversale à peu près rectangulaire.

7. Frein à disque (1) selon l'une quelconque des revendications précédentes,
**caractérisé en ce que**, en direction radiale, l'élasticité du capot (6) est inférieure l'élasticité du ressort de maintien de garniture (5) et supérieure à l'élasticité de la plaque de support de la garniture (41).

8. Frein à disque (1) selon l'une quelconque des revendications précédentes,
**caractérisé en ce que** le capot (6) est plus large dans une zone supérieure proche de l'étrier de maintien de garniture (7) à l'état monté que dans une zone inférieure proche du bord (43) de la plaque de support de garniture (41).

9. Frein à disque (1) selon l'une quelconque des revendications précédentes,
**caractérisé en ce qu'**une distance (a) entre un côté inférieur (61) du capot (6) et une surface d'appui (46) du logement (44) de la plaque de support de garniture (41), contre laquelle le côté inférieur (61) du capot (6) peut être pressé en cas de déviation radiale de la garniture de frein (4) en direction de l'étrier de maintien de garniture (7), est inférieure à la distance (b) entre le ressort de maintien de garniture (5) et le bord radialement extérieur de la plaque de support de garniture (41) au niveau du logement (44).

10. Frein à disque (1) pour un véhicule automobile, en particulier pour un véhicule utilitaire, présentant
- un disque de frein (2),
- un étrier de frein (3), en particulier un étrier coulissant, avec une section de serrage (31) et une section arrière (32),
- au moins deux garnitures de frein (4, 104) avec respectivement une plaque de support de garniture (41, 141) dotée d'au moins un ressort de maintien de garniture (5),
- qui sont maintenues sous précontrainte par le ressort de maintien de garniture (5) respectif contre un étrier de maintien de garniture (7) fixé de manière amovible sur l'étrier de frein (3) dans un puits de garniture (13),
- dans lequel le ressort de maintien de garniture (5) est maintenu radialement de manière à pouvoir être dévié sur un bord extérieur (43) de la plaque de support de garniture (41, 141) radialement par rapport à un axe de rotation du disque de frein (2),
- dans lequel un capot (6, 106) est maintenu dans un logement (44, 144) de la plaque de support de garniture (41, 141) et peut être pressé par la force de ressort du ressort de maintien de garniture (5) contre un côté inférieur (71) de l'étrier de maintien de garniture (7) tourné vers la garniture de frein (4, 104),
dans lequel l'étrier de maintien de garniture (7) est bloqué par un boulon (8) fixé de manière à ne pas pouvoir se déplacer sur la section arrière (32) de l'étrier de frein (3),
**caractérisé en ce que**
le boulon (8) fait saillie de la section arrière (32) à travers une ouverture traversante (165) du capot (106) dans un espace intérieur du capot (106) en tant que butée radiale opposée à une surface de butée de la plaque de support de garniture (141).

11. Frein à disque (1) selon la revendication 10,
**caractérisé en ce que** le boulon (8) est orienté parallèlement à l'axe de rotation du disque de frein (2).

12. Frein à disque (1) selon la revendication 10 ou 11,
**caractérisé en ce qu'**une zone du boulon (8) positionnée à l'intérieur du capot (106) à l'état monté présente une surface d'enveloppe (82) avec une surface d'appui (83) aplatie tournée vers la surface de butée (146) de la plaque de support de garniture (141).

13. Frein à disque (1) selon l'une quelconque des revendications 10 à 12,
**caractérisé en ce que** le logement (144) est délimité vers l'étrier de maintien de garniture (7) par deux saillies (147) dirigées l'une vers l'autre, qui sont entourées par des parois latérales (163) s'étendant radialement et par une nervure formée sur une des parois latérales (163) et formant le côté inférieur (161) du capot (6).

14. Frein à disque (1) selon l'une quelconque des revendications 10 à 13,
**caractérisé en ce qu'**une zone du boulon (8) positionnée à l'intérieur du capot (106) à l'état monté présente une surface d'enveloppe (82) avec au moins une rainure (84) dans laquelle une nervure de sécurité (167) dépassant d'une des parois latérales (163) du capot (106) pour la fixation axiale du boulon (8) fait saillie.

15. Frein à disque (1) selon l'une quelconque des revendications précédentes,
**caractérisé en ce qu'**une pièce centrale (53) du ressort de maintien de garniture (5) présente une fente (54) à travers laquelle une paroi latérale (63, 163) du capot (6) est guidée.
